# EUROPÄISCHE PATENTANMELDUNG

(11) **EP 1 655 100 A1**
(43) Veröffentlichungstag der Anmeldung: **10.05.2006**
(21) Anmeldenummer: 04026307.1
(22) Anmeldetag: 05.11.2004
(51) Int. Cl.: B23P 6/00, F01D 5/00

(54) **Verfahren zur Bearbeitung eines Bauteils und Bauteil**

(71) Anmelder: SIEMENS AKTIENGESELLSCHAFT, 80333 München (DE)
(72) Erfinder: Esser, Winfried, Dr., 44805 Bochum (DE); Goldschmidt, Dirk, Dr., 47445 Moers (DE)

(57) **Zusammenfassung**

Bauteile weisen herstellungs- oder werkstoffbedingt Fehler auf, so dass sie je nach Fehlergröße nicht verwendet werden können. Dies erhöht die Produktionskosten.

Erfindungsgemäß wird ein solches Bauteil (1) nach Fehlergrößen (4, 4', 7) bewertet und kritische Fehler (4, 4') werden ausgearbeitet.

## Beschreibung

Die Erfindung betrifft ein Verfahren zur Bearbeitung eines Bauteils gemäß Oberbegriff des Anspruchs 1 und ein Bauteil gemäß Oberbegriff des Anspruchs 11.

Mechanische Bauteile enthalten oft fertigungs- oder werkstoffbedingt Fehler. Diese Fehler müssen mit den vorhandenen Lieferspezifikationen auf ihre Zulässigkeit bzgl. Akzeptanz des Bauteils für den Betrieb bewertet werden. Verbesserte Prüfmethoden erlauben es, Fehlergrößen und -verteilungen innerhalb des Bauteils zu detektieren.
Fehlerhafte Bauteile können nicht verwendet werden und müssen verschrottet werden. Dies erhöht die Produktionskosten.

Es ist daher Aufgabe der Erfindung ein Verfahren zur Bearbeitung eines Bauteils aufzuzeigen, das die Kosten der Herstellung reduziert.
Die Aufgabe wird gelöst durch ein Verfahren gemäß Anspruch 1. Ebenso ist es Aufgabe der Erfindung ein Bauteil aufzuzeigen, das kostengünstig hergestellt werden kann.
Die Aufgabe wird gelöst durch ein Bauteil gemäß Anspruch 11.

In den Unteransprüchen sind weitere vorteilhafte Maßnahmen und Ausgestaltungen aufgelistet.
Die in den Unteransprüchen aufgelisteten Maßnahmen bzw. Ausgestaltungen können in beliebiger Art und Weise vorteilhaft miteinander kombiniert werden.

Es zeigen
- Figur 1, 6: Bauteile nach dem Stand der Technik,
- Figur 2 bis 5, 7: erfindungsgemäße Bauteile und
- Figur 8: eine Gasturbine.

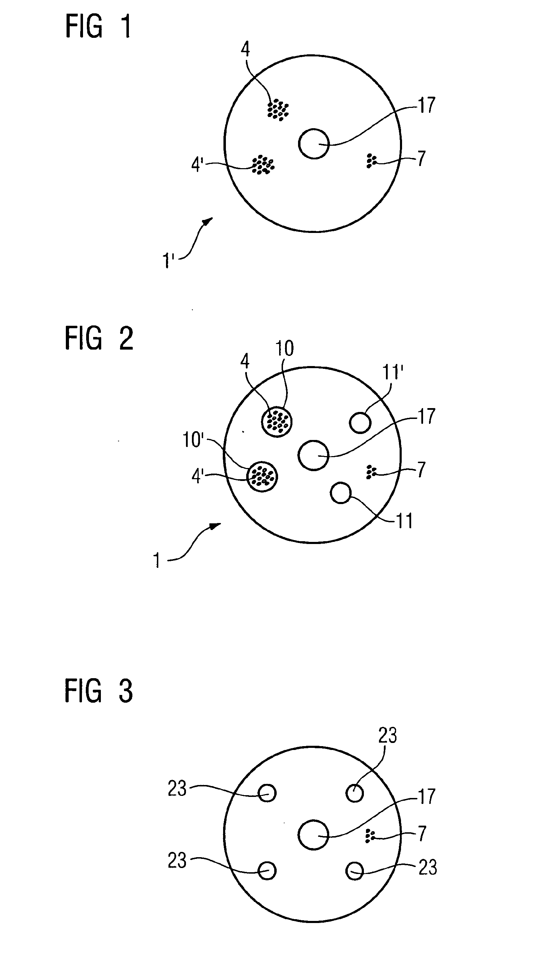

Figur 1 zeigt ein Bauteil 1' nach dem Stand der Technik.
Das Bauteil 1' weist beispielsweise eine zentrale Bohrung 17 auf und ist beispielsweise rotationssymmetrisch ausgeführt, da es sich im Einsatz dreht.
Das Bauteil 1' weist beispielsweise mehrere Fehler oder Fehlergruppen 4, 4', 7 auf.
Der makroskopische Fehler 4, 4', 7 kann ein einzelner Riss oder ein Lunker sein oder ein eng zusammen liegender Bereich (lokal begrenzt) mit mehreren größeren Poren, Rissen oder Defekten (Fehlergruppe) sein.

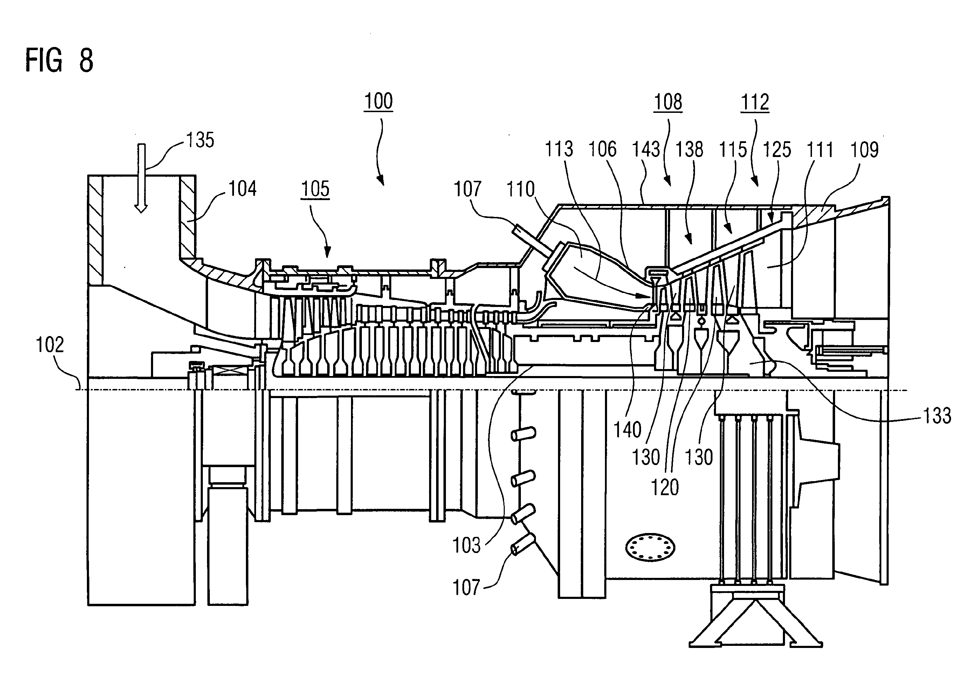

Das erfindungsgemäße Bauteil 1 (Fig. 2) kann ein beliebiges Bauteil, insbesondere einer Turbine, wie z. B. einer Dampf- oder Gasturbine 100 (Fig. 8) sein.
Beispielhaft anhand einer Verdichter- oder Turbinenradscheibe 133 (Fig. 8), also eines rotationssymmetrischen Bauteils, wird das erfindungsgemäße Verfahren bzw. ein erfindungsgemäßes Bauteil 1 nachfolgend näher erläutert.

Die vorhandenen Fehler oder Fehlergruppen 4, 4', 7 des Bauteils 1 werden nach ihrer Detektierung zunächst bewertet und unterteilt nach tolerablen Fehlern 7 und nicht tolerablen Fehlern 4, 4'. Das Bauteil 1 kann einen einzigen Fehler 4, zwei Fehler 4, 4' oder auch mehrere nicht tolerable Fehler aufweisen. Das Bauteil 1 kann, muss aber nicht, zumindest einen tolerablen Fehler 7 aufweisen.
Erfindungsgemäß wird in zumindest einem Bereich 10, 10' um den zumindest einen Fehler 4, 4' Material abgetragen (Fig. 3), so dass ein Sack- oder Durchgangsloch 23, bspw. parallel zur Rotationsachse, gebildet wird (Fig. 3). Somit werden die Bereiche 10, 10' mit den Fehlern 4, 4' verkleinert oder beseitigt, sodass das Bauteil 1 durch diese Abtragung einsatzbereit ist.
Die durch die Abtragung von Material entstandene Lücke wird also nicht wieder aufgefüllt, z. B. mit Lot oder mit Schweißwerkstoff.

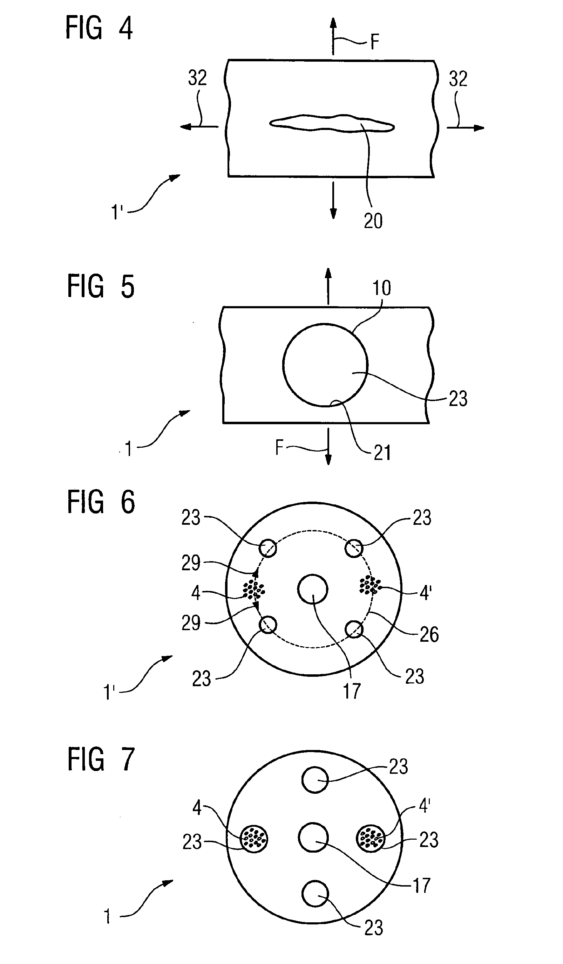

Figur 4 zeigt beispielsweise einen Fehler in Form eines Risses 20.
Beim Anlegen einer Kraft F würde der Riss 20 wegen der damit verbundenen Kerbwirkung in der Richtung 32 wachsen und zum Versagen des Bauteils 1' führen.

Erfindungsgemäß wird Material in einem Bereich 10 um diesen Riss 20 abgetragen, sodass der Riss 20 nicht mehr vorhanden ist, sondern eine sauber ausgearbeitete Vertiefung 23, die glatte innere Oberflächen 21 aufweist, so dass beim Anlegen einer Kraft F wegen der fehlenden Kerbwirkung kein Riss ausgehend von der Vertiefung (Sackloch oder Durchgangsloch 23) wachsen kann (Fig. 5).

Gegebenenfalls muss zum Ausgleich der Unwucht an entsprechenden Ausgleichsbereichen 11, 11' Material (Fig. 2, 3) abgetragen werden, so dass bei sich drehenden Bauteilen wie z. B. einer Radscheibe 133 keine Unwuchten auftreten. Voraussetzung für eine solche Bearbeitung ist selbstverständlich, dass die entstehenden Materialabtragungen grundsätzlich zulässig sind, also die Funktionsfähigkeit des Bauteils nicht beeinträchtigen.
Die Anzahl der Ausgleichsbereiche 11, 11' entspricht bspw. der Anzahl der Bereiche 10, 10' und insbesondere auch in ihrer Form und/oder Größe. Ebenso kann aber auch für zwei Bereiche 10, 10' nur ein Ausgleichsbereich 11 erzeugt werden, der sich insbesondere in Form und/oder Größe unterscheidet von den Bereichen 10, 10' unterscheidet. Entsprechendes gilt für mehr als zwei Bereiche 10, 10'.

Figur 6 zeigt ein weiteres Bauteil 1' nach dem Stand der Technik.
Dieses Bauteil 1' weist für seinen bestimmungsgemäßen Gebrauch Sacklöcher oder Durchgangslöcher 23 auf. Dies sind z. B. bei Radscheiben 133 Bohrungen für Zugankerschrauben, die beispielsweise gleichmäßig oder ungleichmäßig auf einer kreisförmigen Umfangslinie 26 auf dem Bauteil 1' verteilt sind.

Erfindungsgemäß werden diese Bohrungen 23 nach Möglichkeit so eingebracht, dass sie zumindest einen Fehler oder eine Fehlergruppe 4, 4' abdecken (Fig. 7), d.h. die Bohrungen 23 werden in Abhängigkeit von der Lage der Fehler 4, 4' im Bauteil 1 eingebracht.
Dabei können die einzubringenden Sack- bzw. Durchgangslöcher 23 imaginär entlang der Umfangslinie 26 in Umfangsrichtung 29 verschoben werden, bis möglichst viele oder alle Fehler 4, 4' durch die Sack- bzw. Durchgangslöcher 23 entfernt werden können. Dies ist möglich, da die Bohrungen 23 bei in Umfangsrichtung 29 gleichem Abstand zueinander ansonsten beliebig auf dem Bauteil 1 angeordnet sein können.

Gegebenenfalls werden nicht durch Sack- bzw. Durchgangslöcher 23 entfernte Fehler 4, 4' repariert durch Löten oder Schweißen. Die Anzahl der zu reparierenden Stellen ist aber deutlich reduziert.

Die Figur 8 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.
Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenradscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776, EP 1 306 454, EP 1 319 729, WO 99/67435 oder WO 00/44949 bekannt; diese Schriften sind Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden) und Wärme durch eine Wärmedämmschicht aufweisen.
Die Wärmedämmschicht besteht beispielsweise ZrO₂, Y₂O₄-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Verfahren zur Bearbeitung eines Bauteils (1),
das zumindest einen makroskopischen Fehler (4, 4', 7), insbesondere Risse oder Poren,
aufweist,
**dadurch gekennzeichnet, dass**
zumindest ein Fehler (4, 4') durch Abtragen von Material um einen Bereich (10, 10') des zumindest einen Fehlers (4, 4') verkleinert oder beseitigt wird,
wobei die Materialabtragung hinsichtlich ihrer geometrischen Form und Lage im Bauteil so gewählt wird,
dass das Bauteil (1) durch diese Abtragung einsatzfähig wird oder bleibt.

2. Verfahren nach Anspruch 1,
**dadurch gekennzeichnet, dass**
das Bauteil (1) während seiner Herstellung an zumindest einer Stelle (23) formgebend bearbeitet werden muss,
wobei die zumindest eine Stelle (23) in Abhängigkeit von dem zumindest einen Fehler (4, 4') festgelegt wird mit dem Ziel, Stellen einer formgebenden Bearbeitung zumindest teilweise mit Stellen einer Materialabtragung zur Fehlerbeseitigung zur Deckung zu bringen.

3. Verfahren nach Anspruch 1 oder 2,
**dadurch gekennzeichnet,**
**dass** zumindest ein Bereich (10, 10') um den zumindest einen Fehler (4, 4') aus dem Bauteil (1) ausgearbeitet wird und
**dass** in Abhängigkeit von dem zumindest einen ausgearbeiteten Bereich (10, 10') zumindest ein Ausgleichsbereich (11, 11') ausgearbeitet wird,
der keinen Fehler aufweist,
insbesondere um eine Unwucht des Bauteils (1) zu vermeiden.

4. Verfahren nach Anspruch 1, 2 oder 3,
**dadurch gekennzeichnet, dass**
ein Bauteil (1) mit einem einzigen Fehler (4) bearbeitet wird.

5. Verfahren nach Anspruch 1, 2 oder 3,
**dadurch gekennzeichnet, dass**
ein Bauteil (1) mit zwei Fehlern (4, 4') bearbeitet wird.

6. Verfahren nach einem oder mehreren der Ansprüche 1 bis 5,
**dadurch gekennzeichnet, dass**
ein Sackloch (23) erzeugt wird,
wenn der Bereich (10, 10') oder der Ausgleichsbereich (11, 11') ausgearbeitet wird.

7. Verfahren nach einem oder mehreren der Ansprüche 1 bis 5,
**dadurch gekennzeichnet, dass**
ein Durchgangsloch (23) erzeugt wird,
wenn der Bereich (10, 10') oder der Ausgleichsbereich (11, 11') ausgearbeitet wird.

8. Verfahren nach Anspruch 1, 2, 3, 6 oder 7,
**dadurch gekennzeichnet, dass**
vor dem Abtragen des Materials Fehler oder Fehlergruppen (4, 4', 7) im Bauteil (1) detektiert werden und nach kritischer Größe bewertet werden,
so dass aufgrund der Bewertung entschieden wird,
in welchem Bereich (10, 10') Material abgetragen wird.

9. Verfahren nach Anspruch 1 oder 3,
**dadurch gekennzeichnet, dass**
mit dem Verfahren ein sich im Einsatz drehendes, insbesondere rotationssymmetrisches Bauteil (1) bearbeitet wird.

10. Verfahren nach den Ansprüchen 6 bis 9,
**dadurch gekennzeichnet, dass**
das Sack- oder Durchgangsloch (23) parallel zur Rotationsachse verläuft.

11. Bauteil (1),
insbesondere hergestellt nach einem Verfahren nach einem oder mehreren der Ansprüche 1 bis 9,
das zumindest einen Fehler (4, 4', 7) aufweist,
**dadurch gekennzeichnet,**
**dass** der zumindest eine Fehler (4, 4'),
insbesondere durch Erzeugung eines Sack- oder Durchgangslochs (23) ausgearbeitet ist.

12. Bauteil nach Anspruch 11,
**dadurch gekennzeichnet, dass**
zumindest ein anderer Fehler (7) im Bauteil (1) vorhanden ist.

13. Bauteil nach Anspruch 11 oder 12,
**dadurch gekennzeichnet, dass**
das Bauteil (1) ein im Einsatz sich drehendes, insbesondere rotationssymmetrisches Bauteil (1) ist.

14. Bauteil nach Anspruch 11, 12 oder 13,
**dadurch gekennzeichnet, dass**
das Bauteil (1) eine Radscheibe (133) einer Turbine, insbesondere einer Gasturbine (100) oder Dampfturbine ist.

15. Bauteil nach Anspruch 11, 12, 13 oder 14,
**dadurch gekennzeichnet, dass**
das Bauteil (1) zumindest einen weiteren ausgearbeiteten Ausgleichsbereich (11, 11'),
insbesondere in Form eines Sack- oder Durchgangslochs (23) aufweist.
